# EUROPEAN PATENT SPECIFICATION

(11) **EP 1 751 463 B1**
(45) Date of publication and mention of the grant of the patent: **27.01.2010**
(21) Application number: 04735321.4
(22) Date of filing: 28.05.2004
(51) Int. Cl.: F16L 47/12, F16L 25/06

(54) **A THREADED PIPE JOINT COUPLING WITH WIRE LOCK SYSTEM**
GEWINDEROHRVERBINDUNGSKUPPLUNG MIT DRAHTVERRIEGELUNGSSYSTEM
COUPLAGE DE JOINTS DE TUYAUX FILETE DOTE D'UN SYSTEME DE VERROUILLAGE FILAIRE

(43) Date of publication of application: 14.02.2007
(73) Proprietor: Ashirvad Pipes Private Limited, Bangalore 562 107 KRN (IN)
(72) Inventor: Poddar, Deepak, Bangalore 562 107 Karnataka (IN)
(74) Representative: Chaillot, Geneviève
(86) International application number: PCT/IN2004/000147
(87) International publication number: WO 2005/116511

(56) References cited:
- US-A- 1 916 989
- US-A- 2 553 836
- US-A- 3 574 359
- US-A- 4 113 287
- US-B2- 6 739 630

## Description

### FIELD OF INVENTION:

The invention relates to the development of a threaded PVC coupling and pipe joint to join the pipes in water discharge piping system and more particularly to the locking system used in the threaded PVC pipe joint couplings with PVC pipes used for submersible pump applications in bore wells to connect and support the submersible pumps and also to act as delivery pipes to draw water from underground for drinking and irrigation purposes.

### BACKGROUND OF THE INVENTION:

The application of PVC is widely accepted by the market and day-by-day increasingly new models are emerging for different usages.

Substitute for irrigation: PVC pipes are first designed to become substitutes in the fields for irrigation purposes to distribute water. These PVC pipes are placed underneath the soil by which they are more advantageous than the metal pipes from rust and damages.

Substitute for drainage & plumbing: PVC pipes are designed to use for supply waste water & potable water to take care of house hold necessities and are used as the plumbing pipes to supply the water from the over head water tanks to the bathrooms and at necessary outlets. Also these are designed as the drainage pipes to carry the drainage from the bathrooms to the common outlets.

Bore wells: Until now for the bore wells it was widely acceptable method of drawing the water from the bore wells through steel galvanized pipes. These steel galvanized pipes are threaded both sides and by using threaded steel galvanized couplings two pipes are joined.

The main disadvantage in these pipes are that they get rusted in the long run and the pipes breaks in the bore well damaging the whole bore & loss of pump.

In addition, these pipes being very heavy requires more staff or special equipments like chain pulley to remove the pipes from bore well when needed for any repairs.

While the galvanized steel pipes are suspended with the load of the pump & filled with water, they corrode & get rusted over a short period of time and the pipe breaks putting the whole equipment at risk of falling inside the bore well. The threads are prone to corrosion & resistance even more as they are note galvanized.

To over come this drawback many have tried in developing the alternative light weight, high strength, long life pipes. As the PVC is one alternative to replace the steel galvanized pipes, there have been very few successful inventors to create an alternative for this application.

One of such alternative is making pipes & coupling with PVC material. Pipes are push fitted in coupling having grooves for rubber rings for providing leak proof fitment. The pipes & coupling are fixed together after push fitting with a plugging arrangement. Screw is fitted in order to prevent the rotation of the pipe inside the coupling joint.

Main drawbacks of this type of the models are:-
1. Load bearing is being done by plugging system, which is insufficient to take the load.
2. Difficult to disassemble as the plugging material gets distorted due to heavy load.
3. Difficult to users to locate and match the plugging point and fix the coupling with pipe.
4. Extra screw is required which could damage pipe & joint on over tightening.

Another alternative developed is the HDPE pipes. These pipes are flexible hence these are not suitable for column application. These HDPE pipes are soft and since they cannot be threaded, they are lengthy. Over long-term usage with heavy pump sets they elongate and loose their shape permanently. Material becomes hard after some time and cannot be rolled back for removal. Pulling with tractor disturbs the crop and requires more space. Jointing with fittings with submersible pump & top fitting is very weak as threads are not available.

Since all the alternatives were having some type of problem and dis-advantages therefore a right product for use with submersible pumps was most necessary.

The inventor has developed a pipe system which exactly works like a steel galvanized pipes or column pipes made in PVC with added extra features for more reliability, high strength and more advantageous.

### OBJECTIVES OF THE INVENTION:

1. The objective of the invention is the pipes are made with Polyvinyl Chloride, very rigid and lightweight & user friendly.
2. Another advantage is the pipe joints are fixed using a threaded coupling joint like in steel galvanized pipes.
3. Another advantage of the invention is the couplings at one end are locked with a wire lock to stop the removal of the coupling totally attaching it to one end of the pipe.
4. Another advantage is the threads are specially designed square threads having very high load holding capacity.
5. Another advantage is that special rubber seals are provided with the thread to ensure 100% leak proof at high pump pressure.

US 6 739 630 B2 discloses a coupling member having an internally threaded end portion and an opposite socket end portion with a pair of axially-spaced internal circumferential grooves. The internally threaded end portion receives an externally threaded end portion on a pipe, while the opposite socket end portion receives an end portion of another pipe that has an external circumferential groove aligned with one of the pair of internal grooves. A spline is inserted into the aligned grooves through a transverse hole in the wall of the opposite end portion of the coupling member to hold the coupling member and the other pipe against relative axial movement.

### SUMMARY OF THE INVENTION:

The pipes of the piping system to draw the water from the bore wells after being constructed with this invention are joined with the couplers before distributing into retail market. Each pipe is sold with one coupler at one end. The coupler is joined to the pipe by threads and sealing system for leak proof. These threads are assembled at the factory. This joint is threaded as permanent joint. Permanent joint should not be operated in the field by the user during the process of installation / un-installation of the pump system in contrast to the temporary joint on the other side which is operated by the user during installation / un-installation. Even through the bore well depth has increased considerably resulting in very high tensile loads on these threaded joints, the thread joints have adequate capacity to bear these suspended loads and have never failed in the field.

An aluminum lock wire is used in matching grooves partially in pipe and coupler for providing the locking system in the permanent joint. Aluminium metal has been used for higher strength and non-rust & corrosion properties, is so designed that it may be dismantled for maintenance of joint. Even with the introduction of this locking system the tensile loads of suspended pump and pipe assembly in the bore well is not shared by the locking system but is borne by threads only as before. This unique design of threaded joint in PVC pipe locked by Aluminum metal wire in a circular matching grooves is a new and original invention along with the other featured components for permanent solution to the user.

### DESCRIPTION OF THE DRAWINGS:

Figure 1 shows the complete block diagram of the coupling joint joining the both the ends of the pipes.
Figure 2 shows the transverse section at the permanent end of the coupling joint showing the wire lock mechanism.
Figure 3 shows the transverse section at the coupling joint showing the permanent end and temporary ends partially of two different pipes.
Figure 4 shows the permanent and temporary ends of the two different pipes joined by a coupling.
Figure 5 shows the two ends of the both pipes before joining without a coupling fixed.
Figure 6 shows a single coupler before fixing to the permanent end and temporary end of two different pipes.
Figure 7 shows the transverse section of the coupling at the permanent joint showing the inner sealing ring fixed at the permanent joint.
Figure 8 shows the threading at the permanent end where in there is no extra travel space at the thread after fitment.
Figure 9 shows the transverse section at the temporary end showing the outer sealing ring fixed between the coupling and the pipe.
Figure 10 shows the cross sectional view of profile ring before fitment.
Figure 11 shows the vertical section view of the pipes fixed to as submersible pump inside the bore well clamped at the top.
Figure 12 shows the outer view of the wire lock when the coupling is fixed to the both permanent end and temporary end.
Figure 13 shows the section through the locking wire grooves in the coupler and pipe.
Figure 14 shows the view of the aluminum lock wire alone as it resides in the locking groove partially in the pipe and partially in the coupler.
Figure 15 shows the section through the locking wire grooves in the coupler and pipe showing the locking wire residing in the locking grooves.

### DESCRIPTION OF THE PREFERRED EMBODIMENTS:

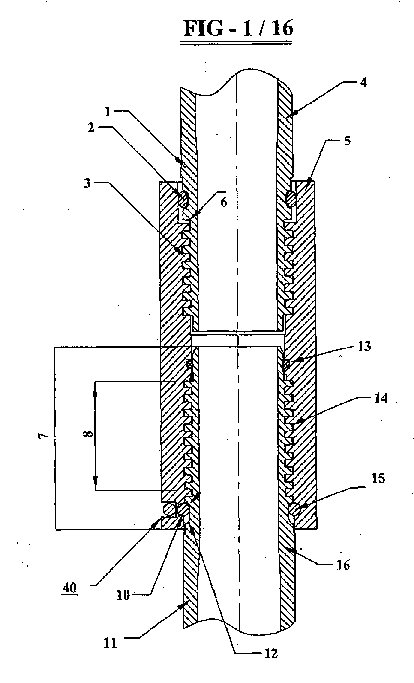

Figure 1 depicts the PVC pipe (1), Sealing ring (2), Square thread in the temporary joint (3), Upper pipe which is rotated during assembling or dismantling (4), PVC coupler (5), thread under cut (circular groove around the thread) in the pipe (6), permanent threaded joint which is factory set and not to be operated by user (7), permanent end threads in engagement (8), groove on the coupler outer surface to fold the lock wire (40), circular wire lock groove which is partially in the coupler (10), lower pipe which is held by clamps during assembling or dismantling of piping (11), groove on the pipe made longer (12) with respect to the theoretical center line of lock wire for assembling comfort and also to ensure the lock wire does not share the axial load in the usage, inner sealing ring (13), square thread in the permanent joint (14), thread lock wire (15), PVC pipe (16) with permanent end.

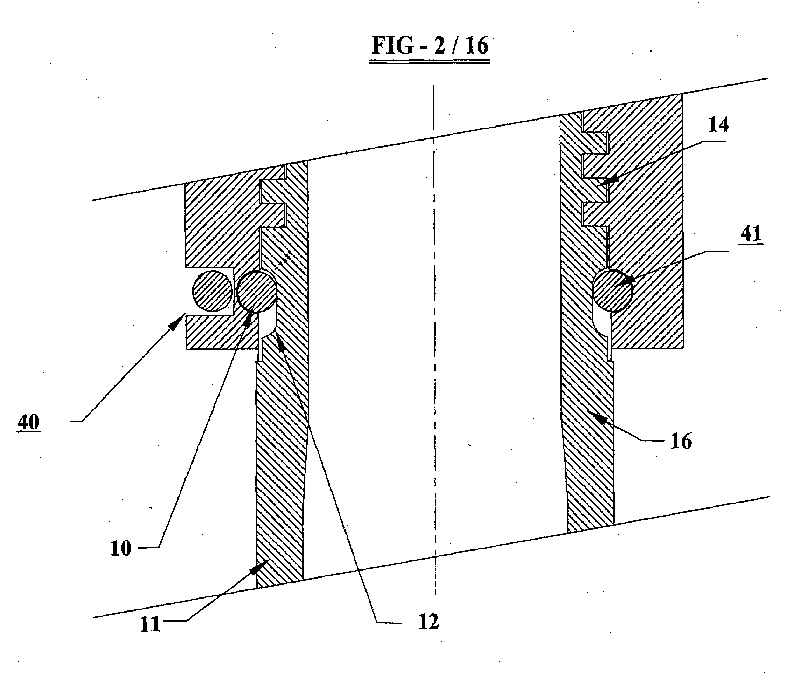

Figure 2 depicts groove on the coupler outer surface to fold lock wire (40), semi-circular wire lock groove which is partially in the coupler (10), lower pipe which is held by clamps during assembling or dismantling of piping (11), groove on the pipe made longer (12) with respect to the theoretical center line of lock wire for assembling comfort and also to ensure the lock wire does not share the axial load in the usage, square thread in the permanent joint (14), thread lock wire (41), PVC pipe (16) with permanent end.

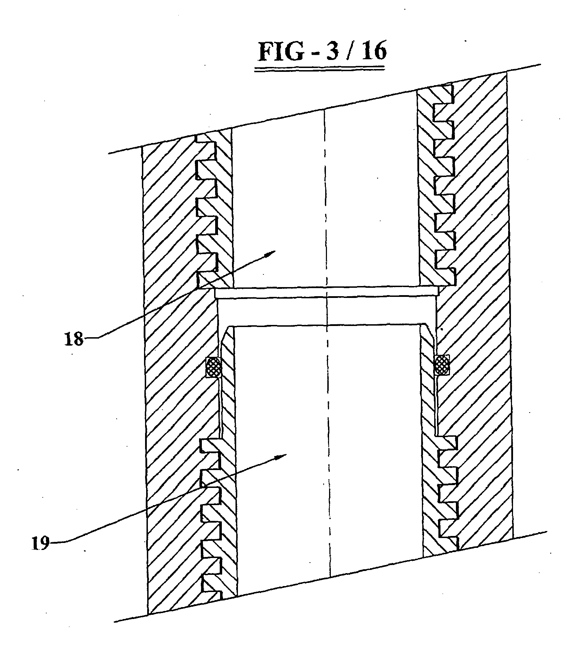

Figure 3 depicts the temporary end (18) of one pipe, permanent end (19) of the other pipe.

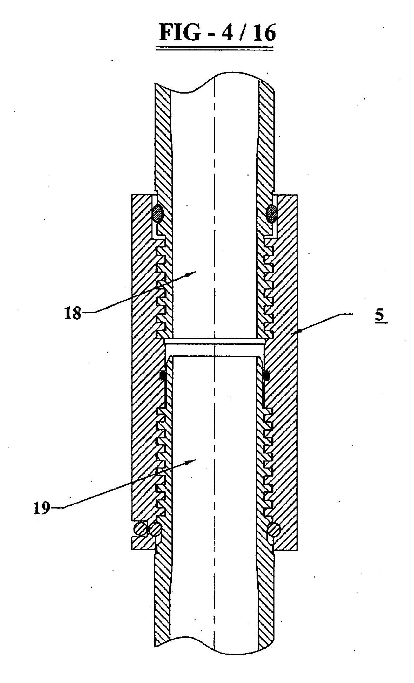

Figure 4 depicts the temporary end (18) of one pipe, permanent end (19) of the other pipe, a coupler (5) joining both the ends of two pipes.

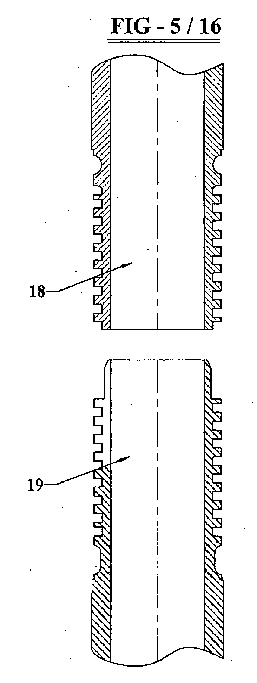

Figure 5 depicts the temporary end (18) of one pipe, permanent end (19) of the other pipe.

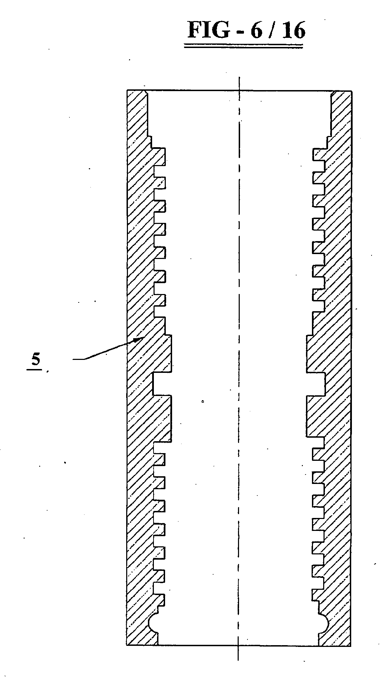

Figure 6 depicts the coupler (5).

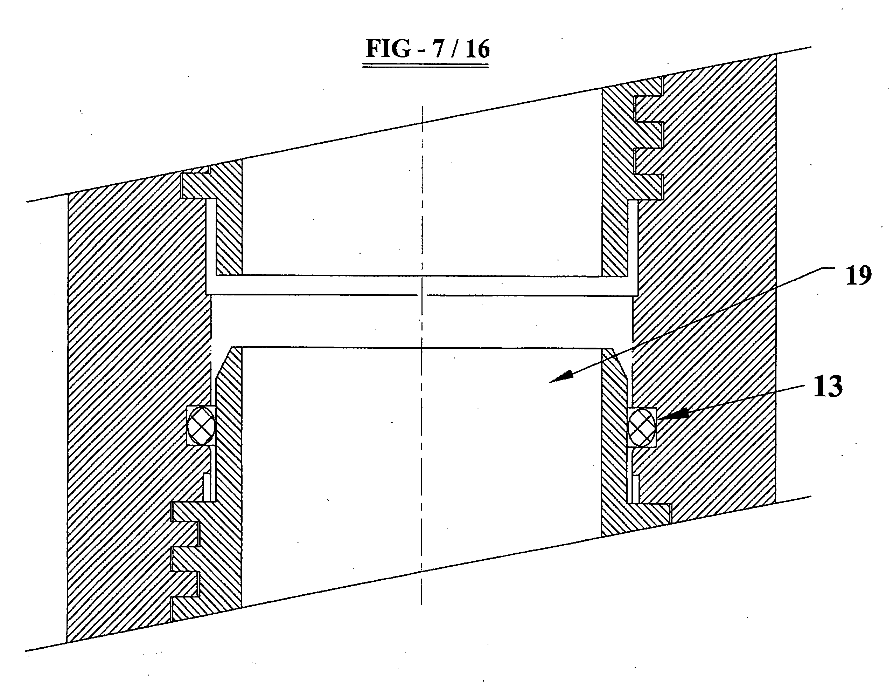

Figure 7 depicts the inner sealing ring (13), which is fixed to the permanent ends of the pipe and coupler.

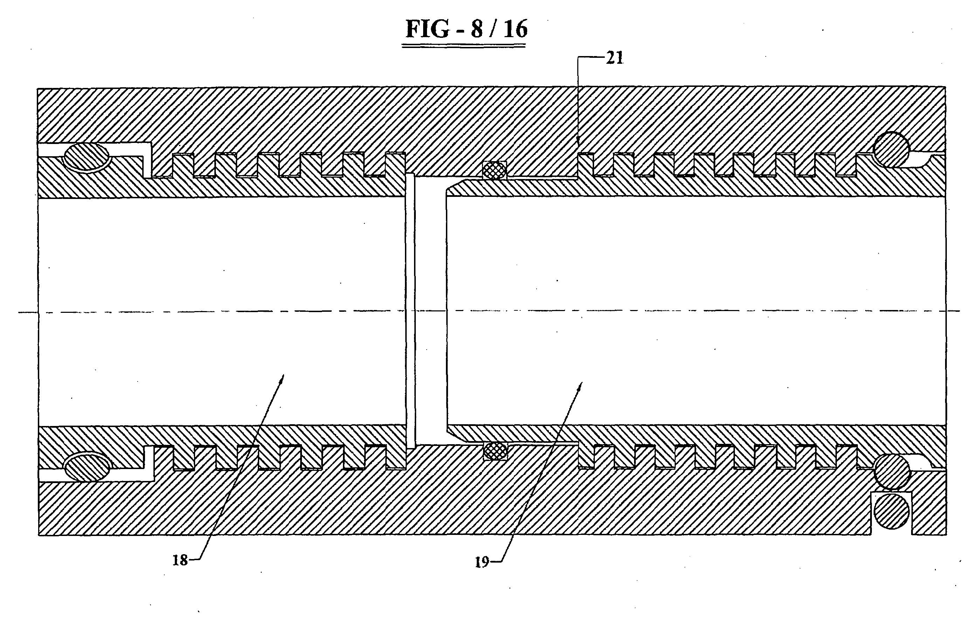

Figure 8 depicts the coupler fixed with both the temporary end (18), and permanent end (19) to which the threading has no extra travel for further fitment (21).

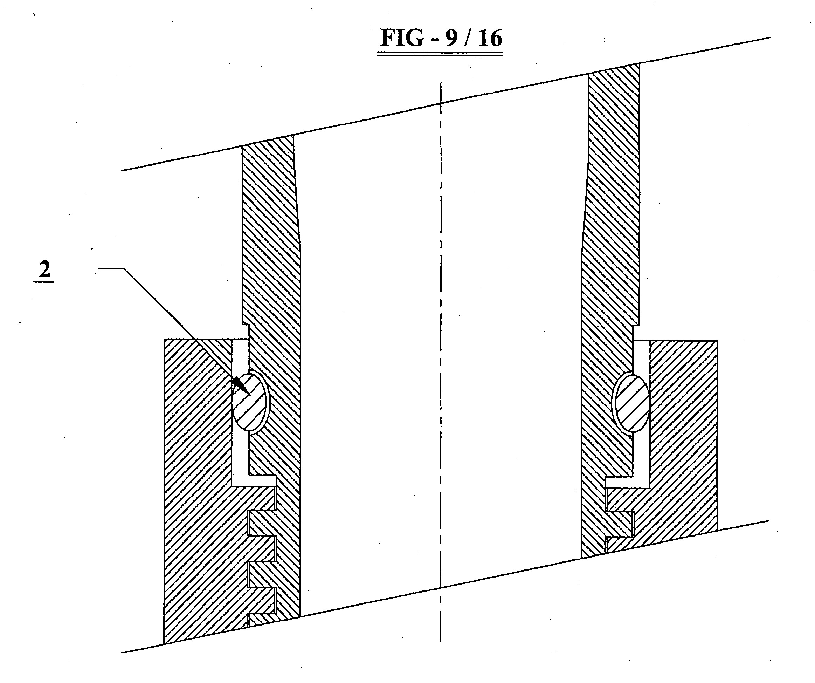

Figure 9 depicts the outer sealing ring fixed between the temporary ends of the pipe and the coupler.

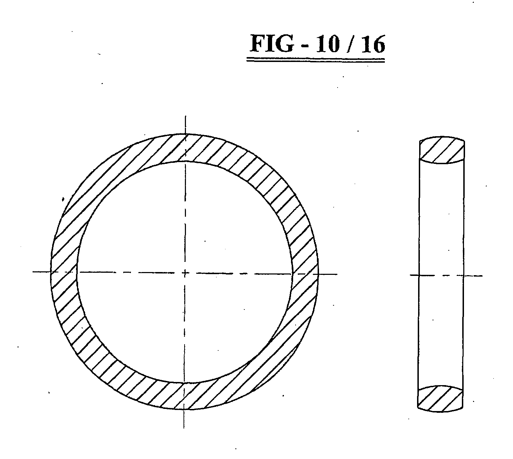

Figure 10 depicts the cross sectional view of the profile ring, which is fixed in the groove, provided in the temporary end of the pipe and seat in the coupler. This profile ring is made in a specific shape, as the contact surfaces are round and the two sides are flattened to fix exactly into the groove and there is no leakage of any water from the threading after the temporary end is fixed.

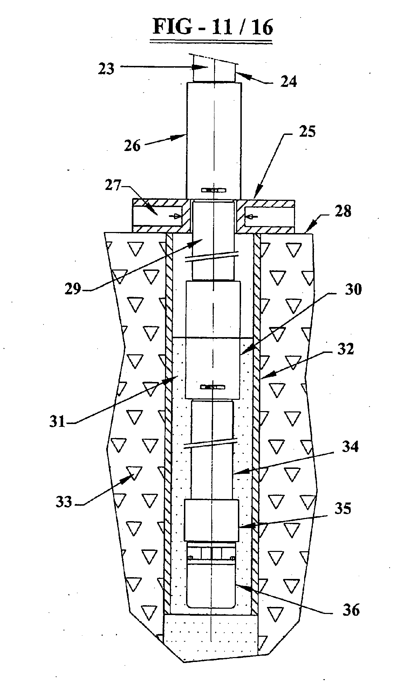

Figure 11 depicts the upper pipe (23) with temporary end which is rotated during assembling / dismantling at the assembling sight near borewell and when the upper pipe is rotated only the temporary end is loosened and the permanent end below remains undisturbed, external piping (24) system according to the distribution requirements, clamps (25) to hold the suspended column pipes system giving support to the coupler and also during assembling / dismantling of piping system, PVC coupler (26), direction of clamping (27), ground level (28), lower pipe (29) which is held by clamps during assembling / dismantling of piping system, series of PVC pipe / coupler joints (30) in the bore well, water column (31), casing pipe in the earth pipe / coupler joints (30) in the bore well, water column (31), casing pipe in the earth (32), earth (33), series of PVC column pipes in the bore well (34), adapter (35) for connecting the pump to the PVC column pipe, submersible water pump (36).

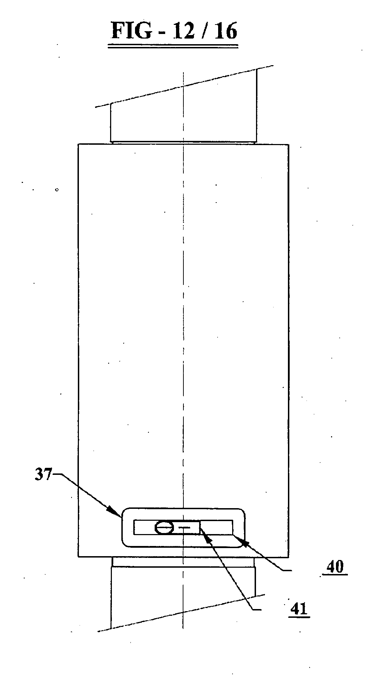

Figure 12 depicts the sticker (37) around the wire lock groove, milled groove (40), lock wire (41)

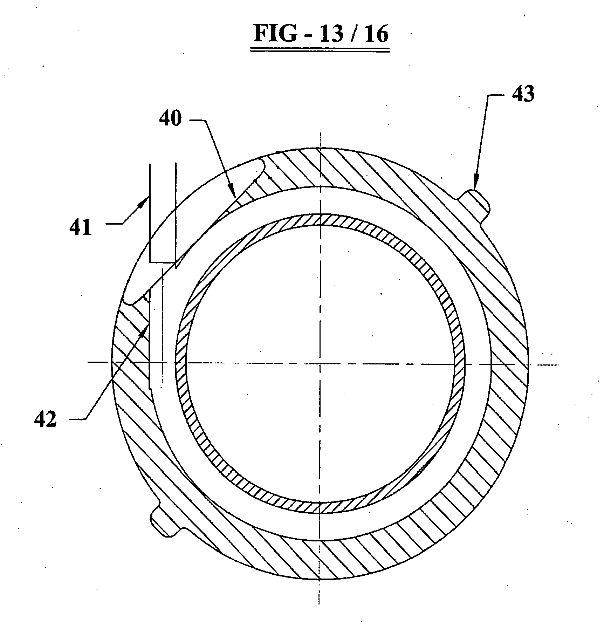

Figure 13 depicts the groove (40) in the coupler for folding the lock wire, aluminum lock wire (41) at the start of insertion, tangential hole (42) in the coupler for inserting the lock wire, ribs (43) in 2 nos diametrically opposite provided on the outer surface of coupler for holding the coupler for fixing the joint.

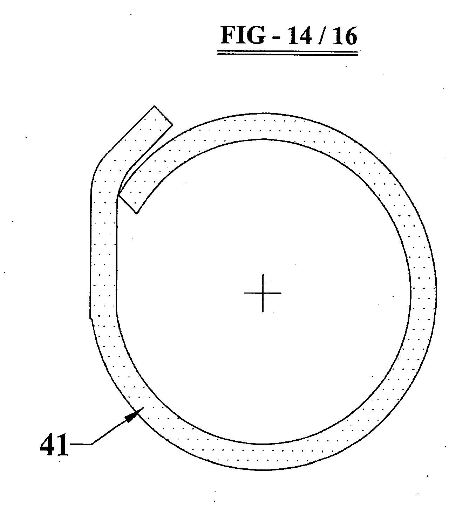

Figure 14 depicts the aluminum wire lock (41) in resting position or inserted position.

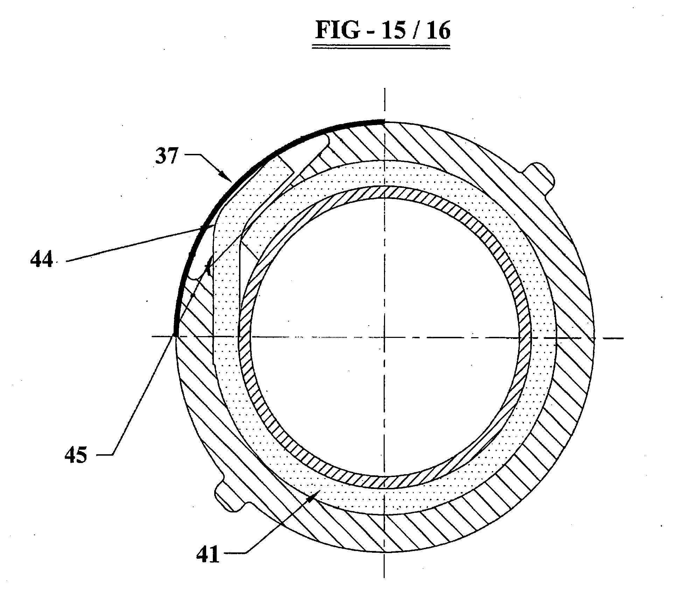

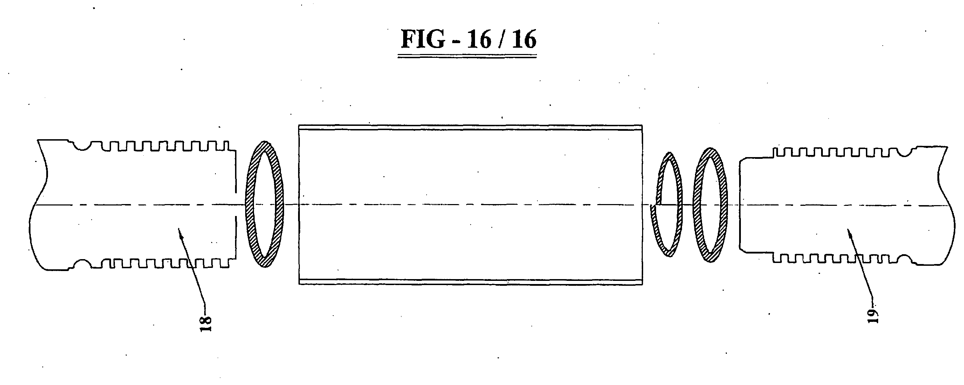

Figure 15 depicts the sticker (37) around the groove, aluminum wire lock (41) in resting or inserted position, bent portion of lock wire (44) which may be straightened for pulling the lock wire out for dismantling the threaded joint for replacement of sealing ring at the permanent end of pipe & other joint maintenance, end of the lock wire (45) folded within the enveloping circle of outer diameter of coupler.

Here the invention addresses the problem faced at the users end. As these are two threaded joints in each coupler and during the process of un-installation, for every pipe the user is supposed to unthread only the temporary joint which is possible only by holding the coupler with the pipe wrench and unscrew the top mating pipe. During this condition a clamp is used just below the coupler to give support and grip the pipe and pump assembly. This process is repeated during disassembly of every pipe joint. To hold the coupler positively with pipe wrench, the provision has been given in the form of two external ribs on the outer surface of the coupler. In spite of all the provisions, the user in many cases does not hold the coupler, but starts unthreading the mating upper pipe during un-installation in the temporary joints. Since the threads are tightened against run out only and there is no positive locking system to retain the permanency of the permanent joint, this results in the rotation of the coupler also on the permanent joint side and the coupler comes our leaving the bottom pipe which is holding the assembly. As the clamping force is not sufficient to grip the smooth surface of the pipe this results the entire pump and pipe assembly to fall into the bore well causing much difficulty for retrieval. Also during the factory setting of the permanent joint considerable amount of stress get induced in pipe & coupler because full tightening is done against run out. Therefore it is necessary that the permanent joint has to be given a fool proof locking system to over come the above problem.

The construction of the whole invention can be explained in two phases. The first phase is fixing the coupler with the permanent end of the pipe in the pipe in the factory and the second phase is the fixing of the temporary end of the another similar pipe so as to join both the pipes using a coupler.

The one end of the pipe is considerably as the permanent end to which a fixed end of the coupler is fitted in the factory. Each permanent end (19) of the pipe is made with the threads as shown in figure 5. The threads (3) & (14) are made with special features having in the shape of squares and are called square shaped threads (3) & (14) as shown in the figure 1.

The groove (12) is made after the threads (14) which is longer (12) than the wire lock to be fixed in it as shown in figure 1. This groove when matched with the groove of the coupler (5) joins with the tangential hole (42) formed from the groove (40) of the coupler for inserting the lock wire as shown in figure 13. The groove of the pipe is made lengthier as shown in figure 1, because during factory fitment of the permanent joint, as they were over tightened against thread run out, considerable amount of stress were induced in the pipe and coupler which has been totally avoided with this invention. Now there is no requirement for extra tightening.

The threading in the pipe is made such that it exactly matches the threading of the coupler with fitting allowances so as to there is no extra travel (21) available for further fitment as shown in figure 8. The front of the permanent end is turned to form a seat for fitment with rubber rings in the coupler.

The other end of the pipe is considered as the temporary end, which is screwed into the temporary end of the fixed coupler to the other pipe. Each temporary end is made with the threads as shown in figure 5 & 1. The threads (3) & (14) are made with special features having in the shape of squares and are called square shaped threads (3) & (14) as shown in figure 1. The groove is made at the bottom of the threading to fix the outer sealing ring (2) as shown in the figure 9. The outer sealing ring is in the shape which contact surfaces are made round and the sides are made flattened as to act as a effective sealing ring as shown in the figure 10.

The coupler is a common joining media to which one end is fixed to a permanent end of one pipe and the other end is fixed to the temporary end of the other pipe. The coupler here is also made of polyvinyl chloride by which it give the advantage of lighter weight and non-corrosive properties. The coupler both ends are threaded with square threads to suit the both ends of the pipes.

At the inner threading of the permanent end of the coupler, at the end there is made a provision for the sealing ring to be fixed (13) which acts as the sealing ring for the permanent end of pipe as shown in figure 1. In the square groove of the coupler, a sealing ring (13) is provided or fixed as shown in figure 7. At the mouth of the permanent end of the threading in the coupler a groove is made (10) to fix the wire lock as shown in figure 1 & 2. And as shown in the figure 12 a milled groove (40) is made for the insertion of the wire lock (41) & folding of wire.

The ribs (43) on the outer surface of the coupler is provided as shown in figure 13. These ribs act as the holding supporters for the wrench during tightening or loosening operations.

To the permanent end (19) of the pipe, the coupler (5) is screwed over it so that the coupler (5) is tightened properly. The coupler is tightened to the last stage of the thread (8) so as there is no extra travel space in the threading (21) as shown in figure 1 & 8. As the inner sealing ring (13) is pre - fixed inside the coupler it will act as the sealing ring to the permanent end (19) of the pipe. The aluminium lock wire (41) is taken and inserted through the tangential hole (42) into the coupler groove (10) and pipe groove (12) as shown in figure 13, 14 & 15. The left out wire is cut exactly to meet the size of the groove and bent (44) inside the milled groove (40) as shown in the figure 15. To this stage the coupler is fixed to the permanent end in the factory and is locked with the wire lock so as to there will not be any disturbance of removing this end while assembling / dismantling the complete piping system.

An aluminium lock wire is used in matching grooves partially in pipe and coupler for providing the locking system. Aluminium metal has been used for higher strength with respect to PVC polymer and water compatibility of the metal. The locking system is so designed that it may be dismantled for maintainance of sealing rings. By this method of wire locking system even after the introduction of this locking system the tensile loads of suspended pump and pipe assembly in the bore will is not shared by the locking system but is borne by threads only as before. This unique design of threaded joint in PVC pipes locked by an Aluminium metal wire in a circular groove in the crux of the invention with all other specific components to support this invention.

This locking system after fixed at the factory is subjected to testing taking the following considerations into account:-
a. The temporary joint of coupler and pipe needs a maximum of 10 kgm torque to open.
b. An average human being can apply upto 20 kgm torque with a ½ meter long pipe wrench normally used in the field.

To the temporary end of the other pipe a outer sealing ring is fixed which will act as the sealing ring to the temporary end. The temporary end is screwed into the coupler, which is already fixed to the permanent end. The temporary end is screwed to such an extent that threading is fixed properly and tightly holding the coupler by a proper joint. This stage starts at the sight of the bore well where assembling / dismantling of the whole piping system takes place.

Thus the whole piping system is joined using this system for drawing the water from the bore wells.

The main advantage of having this system is that by the wire lock system there may not be any danger of removal of the permanent end of the coupler which is fixed and locked in the factory and thereby slipping of the column pipe & pump is totally avoided.

By joining both the pipes with a coupler having threads will have higher weight holding capacity. The threading here is square shaped so that the threads do not slip or damage after several operations.

A clamp can be used to assemble / dismantle the whole piping system. There is no danger of the slipping of the clamp in this case as it properly holds the coupler at the permanent end. And while dismantling there is no chance of layman opening the permanent end as it is permanently locked using a wire lock.

This invention is not limited to the wire lock having been made with the aluminium metal but any other metal can be used and even a PVC lock can be used which is fixed inside the coupler. Any rubber made wire locks may also be used depending on the strength of the pipes and the load bearing capacity.

## Claims

1. A threaded pipe (11) and coupler (5) made of polyvinyl chloride, the coupler (5) comprising:
- two coupling ends having inner square-shaped threading (3, 14), each receiving a pipe end (4, 11) having an outer square-shaped threading, a sealing ring (2, 13) being provided between each coupling end of the inner surface of the coupler (5) and the outer surface of the corresponding pipe end (4, 11);
- a groove (10), being formed on the inner surface of the coupler (5), and co-operating with the part of the outer surface of the pipe end after the threading, when the pipe (11) is threadingly coupled in the coupler (5), to form a tangential hole (42) between the outer surface of the pipe (11) and the inner surface of the coupler (5), a wire lock (41) is inserted in the tangential hole (42) to lock the coupling of the coupler (5) with the end of the pipe (11).

2. A threaded pipe (11) and coupler (5) made of polyvinyl chloride, according to claim 1, **characterized in that** the wire lock (41) is inserted in the tangential hole (42) formed by the groove (10) on the inner surface of the coupler (5) and a groove (12) formed on the part of the outer surface of the pipe (11) after the threading, co-operating with the groove (10) on the inner surface of the coupler (5) when the pipe (11) is threadingly coupled in the coupler (5).

3. A threaded pipe (11) and coupler (5) made of polyvinyl chloride, according to claim 1 or 2, **characterized in that** a space, provided as a milled groove (40), is arranged on the surface of the coupler (5) to fold the wire lock (41) inserted in the tangential hole (42) within the outer diameter of the coupler (5).

4. A threaded pipe (11) and coupler (5) made of polyvinyl chloride, according to any of the preceding claims, **characterized in that** the wire lock (41) is of any shape of round, oval, square or sides flattened.

5. A threaded pipe (11) and coupler (5) made of polyvinyl chloride, according to any of the preceding claims, **characterized in that** the wire lock (41) is made up of any of metal, rubber or plastics.

6. A threaded pipe and coupler made of polyvinyl chloride, according to any of the preceding claims, **characterized in that** the outer groove (12) made on the pipe (11) is lengthier than the groove (10) on the inner surface of coupler

7. A threaded pipe (11) and coupler (5) made of polyvinyl chloride, according to any of the preceding claims, **characterized in that** the outer groove (12) made on the pipe (11) is aligned with the groove (10) on the inner surface of coupler when the pipe (11) is fully tightened in the coupler (5).

8. A threaded pipe (11) and coupler (5) made of polyvinyl chloride, according to any of the preceding claims, **characterized in that** two ribs (43) are provided on the coupler (5) outer surface to hold a pipe wrench during assembling and dismantling of the coupler (5) and a pipe (11).

9. A threaded pipe (11) and coupler (5) made of polyvinyl chloride, according to any of the preceding claims, **characterized in that** the sealing ring (13) between the coupler (5) and the pipe (11) locked to the coupler with the wire lock (41) is provided on the inner surface of the coupler (5).

10. A threaded pipe (11) and coupler (5) made of polyvinyl chloride, according to any of the preceding claims, **characterized in that** the sealing ring (2) between the coupler (5) and the pipe (4) not locked to the coupler (5) with the wire lock (41) is provided on the outer surface of said pipe (4).

11. A threaded pipe (11) and coupler (5) made of polyvinyl chloride, according to any of the preceding claims, **characterized in that** the pipe (4) outer sealing ring (2) has the contact surfaces round or curved and the sides flattened.

12. A threaded pipe (11) and coupler (5) made of polyvinyl chloride, according to any of the preceding claims, **characterized in that** the front portion of the pipe (11) to be locked to the coupler (5) with the wire lock (41) is machined to form a seat for the coupler (5) inner sealing ring (13).

## Patentansprüche

1. Gewinderohr (11) und Verbindungsstück (5) aus Polyvinylchlorid, wobei das Verbindungsstück (5) Folgendes umfasst:
- zwei Kopplungsenden mit einem inneren quadratischen Gewinde (3, 14), wobei jedes ein Rohrende (4, 11) mit einem äußeren quadratischen Gewinde aufnimmt, einen Dichtungsring (2, 13), der zwischen jedem Kopplungsende der Innenfläche des Verbindungsstücks (5) und der Außenfläche des entsprechenden Rohrendes (4, 11) angebracht ist;
- eine Nut (10), die auf der Innenfläche des Verbindungsstücks (5) gebildet ist und mit dem Teil der Außenfläche des Rohrendes jenseits des Gewindes zusammenwirkt, wenn das Rohr (11) durch Verschraubung im Verbindungsstück (5) gekoppelt ist, um ein tangentiales Loch (42) zwischen der Außenfläche des Rohrs (11) und der Innenfläche des Verbindungsstücks (5) zu bilden, wobei ein Verriegelungsdraht (41) in das tangentiale Loch (42) eingeführt wird, um die Kopplung des Verbindungsstücks (5) mit dem Rohrende (11) zu verriegeln.

2. Gewinderohr (11) und Verbindungsstück (5) aus Polyvinylchlorid nach Anspruch 1, **dadurch gekennzeichnet, dass** der Verriegelungsdraht (41) in das tangentiale Loch (42) eingeführt wird, das durch die Nut (10) auf der Innenfläche des Verbindungsstücks (5) und eine Nut (12) gebildet wird, gebildet auf dem Teil der Außenfläche des Rohrs (11) jenseits des Gewindes, die mit der Nut (10) auf der Innenfläche des Verbindungsstücks (5) zusammenwirkt, wenn das Rohr durch Verschrauben mit dem Verbindungsstück (5) gekoppelt wird.

3. Gewinderohr (11) und Verbindungsstück (5) aus Polyvinylchlorid nach einem der Ansprüche 1 oder 2, **dadurch gekennzeichnet, dass** ein Raum, in der Form einer geschliffenen Nut (40) auf der Oberfläche des Verbindungsstücks (5) angebracht ist, um den Verriegelungsdraht (41), eingeführt in das tangentiale Loch (42) im Inneren des Außendurchmessers des Verbindungsstücks (5), zu knicken.

4. Gewinderohr (11) und Verbindungsstück (5) aus Polyvinylchlorid nach einem der vorhergehenden Ansprüche, **dadurch gekennzeichnet, dass** der Verriegelungsdraht (41) irgendeine einer abgerundeten, ovalen, quadratischen oder mit abgeflachten Seiten versehenen Form aufweist.

5. Gewinderohr (11) und Verbindungsstück (5) aus Polyvinylchlorid nach einem der vorhergehenden Ansprüche, **dadurch gekennzeichnet, dass** der Verriegelungsdraht (41) aus irgendeinem eines Metall-, Gummi- oder Plastikmaterials hergestellt ist.

6. Gewinderohr und Verbindungsstück aus Polyvinylchlorid nach einem der vorhergehenden Ansprüche, **dadurch gekennzeichnet, dass** die äußere Nut (12), durchgeführt auf dem Rohr (11), länger als die Nut (10) auf der Innenfläche des Verbindungsstücks ist.

7. Gewinderohr (11) und Verbindungsstück (5) aus Polyvinylchlorid nach einem der vorhergehenden Ansprüche,
**dadurch gekennzeichnet, dass** die äußere Nut (12), durchgeführt auf dem Rohr (11), mit der Nut (10) auf der Innenfläche des Verbindungsstücks ausgerichtet ist, wenn das Rohr (11) vollständig im Verbindungsstück (5) eingeklemmt ist.

8. Gewinderohr (11) und Verbindungsstück (5) aus Polyvinylchlorid nach einem der vorhergehenden Ansprüche, **dadurch gekennzeichnet, dass** zwei Rippen (43) auf der Außenfläche des Verbindungsstücks (5) angebracht sind, um während der Montage und der Demontage des Verbindungsstücks (5) und eines Rohrs (11) einen Rohrschlüssel zu stützen.

9. Gewinderohr (11) und Verbindungsstück (5) aus Polyvinylchlorid nach einem der vorhergehenden Ansprüche,
**dadurch gekennzeichnet, dass** der Dichtungsring (13) zwischen dem Verbindungsstück (5) und dem Rohr (11), verriegelt auf dem Verbindungsstück mit dem Verriegelungsdraht (41), auf der Innenfläche des Verbindungsstücks (5) angebracht ist.

10. Gewinderohr (11) und Verbindungsstück (5) aus Polyvinylchlorid nach einem der vorhergehenden Ansprüche,
**dadurch gekennzeichnet, dass** der Dichtungsring (2) zwischen dem Verbindungsstück (5) und dem Rohr (4), nicht verriegelt auf dem Verbindungsstück (5) mit dem Verriegelungsdraht (41), auf der Außenfläche des Rohrs (4) angebracht ist.

11. Gewinderohr (11) und Verbindungsstück (5) aus Polyvinylchlorid nach einem der vorhergehenden Ansprüche,
**dadurch gekennzeichnet, dass** der äußere Dichtungsring (2) des Rohrs (4) gerundete oder gekrümmte Kontaktflächen und abgeflachte Seiten aufweist.

12. Gewinderohr (11) und Verbindungsstück (5) aus Polyvinylchlorid nach einem der vorhergehenden Ansprüche, **dadurch gekennzeichnet, dass** der vordere Teil des Rohrs (11), der auf dem Verbindungsstück (5) mit dem Verriegelungsdraht (41) verriegelt werden muss, bearbeitet wird, um einen Sitz für den inneren Dichtungsring (13) des Verbindungsstücks (5) zu bilden.

## Revendications

1. - Tuyau fileté (11) et raccord (5) en poly(chlorure de vinyle), le raccord (5) comprenant :
- deux extrémités de couplage ayant un filetage carré interne (3, 14), chacune recevant une extrémité de tuyau (4, 11) ayant un filetage carré externe, une bague d'étanchéité (2, 13) étant disposée entre chaque extrémité de couplage de la surface interne du raccord (5) et la surface externe de l'extrémité de tuyau (4, 11) correspondante ;
- une rainure (10), formée sur la surface interne du raccord (5), et coopérant avec la partie de la surface externe de l'extrémité de tuyau au-delà du filetage, lorsque le tuyau (11) est couplé par vissage dans le raccord (5), pour former un trou tangentiel (42) entre la surface externe du tuyau (11) et la surface interne du raccord (5), un fil de verrouillage (41) étant introduit dans le trou tangentiel (42) pour verrouiller le couplage du raccord (5) avec l'extrémité du tuyau (11).

2. - Tuyau fileté (11) et raccord (5) en poly(chlorure de vinyle), selon la revendication 1, **caractérisés par le fait que** le fil de verrouillage (41) est introduit dans le trou tangentiel (42) formé par la rainure (10) sur la surface interne du raccord (5) et une rainure (12) formée sur la partie de la surface externe du tuyau (11) au-delà du filetage, coopérant avec la rainure (10) sur la surface interne du raccord (5) lorsque le tuyau est couplé par vissage au raccord (5).

3. - Tuyau fileté (11) et raccord (5) en poly(chlorure de vinyle), selon l'une des revendications 1 ou 2, **caractérisés par le fait qu'**un espace, sous la forme d'une rainure meulée (40), est disposée sur la surface du raccord (5) pour replier le fil de verrouillage (41) introduit dans le trou tangentiel (42) à l'intérieur du diamètre externe du raccord (5).

4. - Tuyau fileté (11) et raccord (5) en poly(chlorure de vinyle), selon l'une quelconque des revendications précédentes, **caractérisés par le fait que** le fil de verrouillage (41) est d'une forme quelconque parmi une forme arrondie, ovale, carrée, ou à côtés aplatis.

5. - Tuyau fileté (11) et raccord (5) en poly(chlorure de vinyle), selon l'une quelconque des revendications précédentes, **caractérisés par le fait que** le fil de verrouillage (41) est fabriqué à partir de l'un quelconque parmi du métal, du caoutchouc ou une matière plastique.

6. - Tuyau fileté et raccord en poly(chlorure de vinyle), selon l'une quelconque des revendications précédentes, **caractérisés par le fait que** la rainure externe (12) réalisée sur le tuyau (11) est plus longue que la rainure (10) sur la surface interne du raccord.

7. - Tuyau fileté (11) et raccord (5) en poly(chlorure de vinyle), selon l'une quelconque des revendications précédentes, **caractérisés par le fait que** la rainure externe (12) réalisée sur le tuyau (11) est alignée avec la rainure (10) sur la surface interne du raccord lorsque le tuyau (11) est complètement serré dans le raccord (5).

8. - Tuyau fileté (11) et raccord (5) en poly(chlorure de vinyle), selon l'une quelconque des revendications précédentes, **caractérisés par le fait que** deux nervures (43) sont disposées sur la surface externe du raccord (5) pour supporter une clé à tuyau pendant le montage et le démontage du raccord (5) et d'un tuyau (11).

9. - Tuyau fileté (11) et raccord (5) en poly(chlorure de vinyle), selon l'une quelconque des revendications précédentes, **caractérisés par le fait que** la bague d'étanchéité (13) entre le raccord (5) et le tuyau (11) verrouillé au raccord avec le fil de verrouillage (41) est disposée sur la surface interne du raccord (5).

10. - Tuyau fileté (11) et raccord (5) en poly(chlorure de vinyle), selon l'une quelconque des revendications précédentes, **caractérisés par le fait que** la bague d'étanchéité (2) entre le raccord (5) et le tuyau (4) non verrouillé au raccord (5) avec le fil de verrouillage (41) est disposée sur la surface externe dudit tuyau (4).

11. - Tuyau fileté (11) et raccord (5) en poly(chlorure de vinyle), selon l'une quelconque des revendications précédentes, **caractérisés par le fait que** la bague d'étanchéité (2) externe du tuyau (4) a des surfaces de contact arrondies ou courbes, et les côtés aplatis.

12. - Tuyau fileté (11) et raccord (5) en poly(chlorure de vinyle), selon l'une quelconque des revendications précédentes, **caractérisés par le fait que** la partie avant du tuyau (11) devant être verrouillée sur le raccord (5) avec le fil de verrouillage (41) est usinée pour former un siège pour la bague d'étanchéité interne (13) du raccord (5).
